(19) Europäisches Patentamt
European Patent Office
Office européen des brevets

(11) **EP 3 292 537 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(51) Int Cl.:
*G06T 5/00* (2006.01)     *G06T 7/30* (2017.01)

(21) Anmeldenummer: **16726795.4**

(22) Anmeldetag: **09.05.2016**

(86) Internationale Anmeldenummer:
**PCT/EP2016/060259**

(87) Internationale Veröffentlichungsnummer:
**WO 2016/177905 (10.11.2016 Gazette 2016/45)**

(54) **VERFAHREN ZUR BILDVERBESSERUNG VON BILDDATEN EINES DENTALMEDIZINISCHEN BILDERZEUGUNGSSYSTEMS**

METHOD FOR IMPROVING IMAGE DATA OF A DENTO-MEDICAL IMAGING SYSTEM

PROCÉDÉ POUR AMÉLIORER LA QUALITÉ DE DONNÉES D'IMAGE D'UN SYSTÈME D'IMAGERIE DENTO-MÉDICAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2015 DE 102015208555**

(43) Veröffentlichungstag der Anmeldung:
**14.03.2018 Patentblatt 2018/11**

(73) Patentinhaber: **Sirona Dental Systems GmbH 64625 Bensheim (DE)**

(72) Erfinder:
• **ULRICI, Johannes 64285 Darmstadt (DE)**
• **SCHULZE-GANZLIN, Ulrich 64653 Lorsch (DE)**
• **ABKAI, Ciamak 68542 Heddesheim (DE)**

(74) Vertreter: **Özer, Alpdeniz et al Sirona Dental Systems GmbH Corporate Legal Fabrikstraße 31 64625 Bensheim (DE)**

(56) Entgegenhaltungen:
**EP-A1- 2 570 080     WO-A1-2014/008613**

**Beschreibung**

Technisches Gebiet

Die Erfindung betrifft in der Dentalmedizin eingesetzte Bilderzeugungs- bzw. Bilddarstellungssysteme und insbesondere ein Verfahren zur Bildverbesserung von mit solchen Systemen gewonnenen Bilddaten. Des Weiteren betrifft die Erfindung ein Computerprogramm, einen maschinenlesbaren Datenträger zur Speicherung des Computerprogramms und ein Bilderzeugungs- bzw. Bilddarstellungssystem, mittels derer das erfindungsgemäße Verfahren durchführbar ist.

Stand der Technik

Moderne Bilderzeugungssysteme, die insbesondere in der Dental- bzw. Zahnmedizin eingesetzt werden, produzieren Bilddaten bzw. Volumendaten, die das abzubildende Objekt in seiner Dreidimensionalität (3D) repräsentieren und die für den Nutzer respektive den Betrachter aufbereitet und dargestellt werden müssen. Dabei besteht mittlerweile die Möglichkeit, auf präoperativ oder intraoperativ gewonnene 3D-Bilddaten des zu behandelnden Objekts, beispielsweise eines menschlichen Kiefers oder Zahns, zurückzugreifen, um eine Diagnose durchzuführen und auch um vor einem medizinischen Eingriff Planungen vornehmen zu können.

In der Zahnmedizin wird dabei bereits die an sich bekannte digitale Volumentomographie (DVT) eingesetzt, die sich eines kegelförmigen Strahlenbündels bedient und ein dreidimensionales, bildgebendes Tomografie-Verfahren unter Nutzung von Röntgenstrahlen darstellt, bei dem Schnittbilder erzeugt werden. Wie beim digitalen Röntgen rotieren auch bei der DVT eine Röntgenröhre und ein gegenüberliegender digitaler Bildsensor bzw. Detektor, der über eine röntgenempfindliche Szintillator-Schicht verfügt, um einen liegenden, sitzenden oder stehenden Patienten herum. Die in der Regel um 180 bis 360 Grad mit einem Fächerwinkel rotierende Röntgenröhre sendet einen kegelförmigen, meist gepulsten Röntgenstrahl aus.

Während des Umlaufs der Röntgenröhre wird eine Vielzahl von zweidimensionalen Tomogrammen (d.h. einzelnen Schichten aus einer tomographischen Rekonstruktion aufgenommen und aus diesen Röntgenaufnahmen ein 3D-Bilddatensatz ermittelt. Die Röntgenstrahlung durchdringt das dreidimensionale Untersuchungsgebiet und erzeugt ein abgeschwächtes Grauwerte-Röntgenbild als 2D-Röntgen-Projektion.

Die Darstellung der 3D-Bilddaten erfolgt meist auf herkömmlichen flachen Bildschirmen und damit in nur zwei Dimensionen (2D). Aus der Chirurgie ist es jedoch bekannt, gleichzeitig drei zueinander orthogonale Schnitte durch das Objekt in jeweils zwei Dimensionen darzustellen. Mit einem Zeigeinstrument hat der Bediener dabei die Möglichkeit, die jeweilige Lage der orthogonalen Schnitte bzw. die Tiefe der Schnitte vorzugeben. Eine andere Darstellungsmöglichkeit ist die Projektion der 3D-Bilddaten auf eine definierte Ebene und eine anschließende 2D-Darstellung dieser Ebene.

Nachteilig an den bekannten Verfahren ist, dass bei jeder Projektion von 3D-Bilddaten in eine solche Ebene Detailinformationen insoweit verloren gehen, als in Richtung der Projektion über die in einem genannten Strahlenkegel liegenden einzelnen Volumeninformationen gemittelt wird und daher bei einer genannten 2D-Darstellung auch nicht zu dem jeweils zu untersuchenden Objekt gehörende Volumeninformationen berücksichtigt werden.

Aus der DE 103 38 145 A1 ist ein Verfahren zur Darstellung von 3D-Bilddaten eines hier betroffenen Bilderzeugungssystems bekannt geworden, bei dem eine relativ gering räumlich auflösende Projektion als Gesamtaufnahme dargestellt wird, an der sich der Betrachter einen Überblick verschaffen kann. Andererseits wird dem Nutzer die Möglichkeit gegeben, aus der Projektion einen Bildausschnitt auszuwählen und in diesem eine Detailaufnahme höherer Qualität darzustellen. Auf diese Art erkennt der Nutzer, wo er sich innerhalb des Objektes befindet und bekommt zudem weitere Detailinformation bezüglich des ausgewählten Bildausschnitts.

Aus der genannten Projektion wird somit ein Teilbereich ausgewählt und innerhalb des Teilbereiches ein Detailbild erzeugt, wobei die Erzeugung in unmittelbarem oder in mittelbarem Rückgriff auf den Datenbestand der Bilddaten geschieht. Das Detailbild zeichnet sich dadurch aus, dass es einen anderen Informationsgehalt aufweist als die Projektion, wobei der höhere Informationsgehalt sich beispielsweise auf die Auflösung und/oder den Blickwinkel beziehen kann. Auf dem Bildschirm wird dann im Rahmen des vom Nutzer ausgewählten Teilbereichs das Detailbild dargestellt. Der Nutzer sieht somit ein Bild im Bild.

Die Erzeugung hier betroffener zweidimensionaler (2D) Bilddaten erfolgt z.B. röntgenographisch, durch Aufnahme intraoral erstellter Bilder mittels eines im Mundraum des jeweiligen Patienten angeordneten Röntgendetektors sowie einer außerhalb des Mundraums angeordneten Röntgenquelle.

EP2570080A1 offenbart ein Strahlungsabbildungsgerät und Phantom, das für dieses Gerät verwendet wird. WO2014/008613A1 offenbart ein Verfahren zur Erzeugung eines graphischen 3D-Computermodells von mindestens einer anatomischen Struktur in einem wählbaren prä-, intra- oder postoperativen Zustand.

Es ist Aufgabe der vorliegenden Erfindung, ein Verfahren zur Verbesserung der Bildqualität bzw. Darstellungsqualität bzw. zum Erhöhen des Informationsgehaltes bestehender 2D- und/oder 3D-Bilddaten anzugeben, mittels dessen insbesondere im Strahlengang der Strahlenquelle liegende, die Erzeugung der Bilddaten beeinflussende bzw. verfälschende Strukturen oder Objekte aus den vorliegenden Bilddaten nachträglich herausgerechnet werden können.

Darstellung der Erfindung

Diese Aufgabe wird durch die unabhängigen Ansprüche 1, 13, 14 und 15 gelöst. Der Erfindung liegt insbesondere im Bereich der Dentalmedizin zum einen der Gedanke zugrunde, durch intraorales Röntgen erzeugte 2D-Bilddaten (sogenanntes "IO-Bild") mit z.B. durch eine genannte digitale Volumentomographie (DVT) erzeugten 3D-Bilddaten, insbesondere zu Zwecken einer Bildqualitätsverbesserung, zu kombinieren bzw. zu verrechnen. Durch die Verrechnung kann insbesondere die Bildqualität bzw. die Darstellungsqualität der 2D-Bilddaten verbessert werden. Zum anderen liegt auch der Gedanke zugrunde, umgekehrt mit z.B. der genannten digitalen Volumentomographie (DVT) erzeugte 3D-Bilddaten mit durch intraorales Röntgen erzeugten 2D-Bilddaten so zu kombinieren bzw. zu verrechnen, dass insbesondere die Bildqualität bzw. die Darstellungsqualität der 3D-Bilddaten verbessert wird.

Die ebenfalls insbesondere mögliche Verbesserung der Bildqualität von 3D-Bilddaten ergibt sich dabei insbesondere aus den gegenüber den 3D-Daten relativ höher auflösenden 2D-Bilddaten sowie im Falle der 2D-Bilddaten insbesondere aufgrund der gegenüber den 2D-Bilddaten höheren Tiefen-Auflösung der 3D-Bilddaten.

Zudem soll ermöglicht werden, aus einem der genannten Bilddatensätze Rückschlüsse auf die Güte bzw. Qualität des jeweils anderen Bilddatensatzes zu ziehen, um dann gegebenenfalls geeignete, die Bildqualität verbessernde Änderungen bzw. Korrekturen an den Bilddaten vorzunehmen.

Das erfindungsgemäße Verfahren zur Verarbeitung von Bilddaten eines dentalmedizinischen Bilderzeugungssystems, insbesondere zur Verbesserung der Bildqualität, welches eine erste Bilderzeugungseinheit zur Erzeugung von zweidimensionalen Bilddaten sowie eine zweite Bilderzeugungseinheit zur Erzeugung von dreidimensionalen Bilddaten aufweist, wobei das Bilderzeugungssystem für ein zu untersuchendes Objekt sowohl zweidimensionale Bilddaten als auch dreidimensionale Bilddaten bereitstellt, schlägt insbesondere vor, genannte intraoral erzeugte 2D-Röntenaufnahmen mit durch DVT gewonnenen 3D-Aufnahmen anhand von geometrischen Aufnahmebedingungen möglichst applikationsnah zu verrechnen und die sich aus der Verrechnung ergebenden kombinierten Informationen bzw. Daten so zu visualisieren, dass für den Anwender, insbesondere für den behandelnden Arzt, ein diagnostischer Mehrwert entsteht.

Es ist anzumerken, dass die beiden Begriffe erste Bilderzeugungseinheit und zweite Bilderzeugungseinheit nur funktionell zu verstehen sind und diese beiden Funktionseinheiten auch physisch in einer einzigen Bilderzeugungseinheit realisiert sein können, d.h. nicht notwendigerweise funktionell oder räumlich getrennt ausgebildet bzw. angeordnet sein müssen. So kann eine dieser beiden Bilderzeugungseinheiten durch einen modifizierten Betriebsmodus der jeweils anderen Bilderzeugungseinheit realisiert sein. Ferner müssen die beiden Bilderzeugungseinheiten nicht Teil desselben Bilderzeugungssystems sein, sondern können an unterschiedlichen Orten, z.B. in verschiedenen Zahnarztpraxen, angeordnet sein bzw. verwendet werden und die jeweils erzeugten Bilddaten erst nachträglich in einem Bilderzeugungssystem zusammengeführt werden.

Es ist zudem anzumerken, dass eine genannte Bildverbesserung eine Verbesserung der Bildqualität, z.B. Bildschärfe, Bildauflösung, Bildkontrast und eine Beseitigung oder Reduktion von Bildartefakten, oder eine Verbesserung des Informationsgehaltes der Bilddaten, z.B. von Tiefeninformationen, Informationen über die Orthogonalität der Aufnahmen, oder Informationen über mögliche Entzerrungen der Bildinhalte, bedeuten kann.

Die genannte Verrechnung der 2D- und 3D-Bilddaten erfolgt geometrisch bevorzugt anhand der an sich bekannten Methode der 2D/3D-Registrierung (P. Markelj, D. Tomazevic, B. Likar, und F. Pernus, "A review of 3D/2D registration methods for image-guided interventions", Medical Image Analysis, Bd. In Press, Corrected Proof.), welche bevorzugt automatisiert erfolgt. Durch eine perspektivisch korrekte 2D/3D-Registrierung wird die Beziehung zwischen einer 2D-Aquisitionsgeometrie (also Lage und Orientierung von Detektor und Quelle) in Bezug auf das 3D Objekt berechnet.

Ist diese Beziehung bekannt, kann ermittelt werden, welche Objekte im Strahlengang von einer Quelle zu einem gegebenen Bildpunkt (Pixel) welchen Beitrag liefern. D.h. jeder Wert entlang des Strahlenganges kann in einer bestimmten Tiefe aus den 3D-Informationen in Bezug auf das finale Projektionsbild gesetzt werden. Diese im Folgenden als Profil-Tiefen-Variation bezeichnete erfindungsgemäß abgewandelte Verrechnung kann manuell durch den Benutzer erfolgen, indem dieser z.B. eine virtuelle Detektor-Schicht perspektivisch korrekt und parallel zur ermittelten Lage des Detektors verschiebt, um selbst zu bewerten, welche Beiträge einen Informationsgehalt haben. Es ist auch eine automatische Verschiebung oder Auffindung der Schicht (des Profils) mit dem signifikantesten Beitrag (z.B. Zahnschmelz) möglich. Das Auffinden einer Schicht mit dem signifikantesten Beitrag kann bevorzugt mittels statistischer Korrelation, z.B. einer Kreuzkorrelation oder einer Mutual-Information, erfolgen.

Zur geometrischen Verrechnung der zweidimensionalen und der dreidimensionalen Bilddaten können Bildpunkte in einem dreidimensionalen (3D-) Raum Bildpunkten einer zweidimensionalen (2D-) Projektionsfläche, wie nachfolgend anhand von Ausführungsbeispielen beschrieben, zugeordnet werden. Die genannten Bildpunkte im 2D-Raum und die genannten Bildpunkte im 3D-Raum können dabei auch Punkte auf Bildflächen darstellen, wobei Ebenen, gekrümmte Flächen oder sogar einzelne Punkte bzw. Punktwolken umfasst sein können. Bevorzugt handelt es sich dabei um ebene Bildflächen.

So kann anhand einer genannten Methode der Profil-Tiefen-Variation gemäß der Beziehung z0 - z1 - z2 - z3, mit Bildebenen z1, z2, z3, usw. und einer Detektorebene z0 eine Profiltiefe berechnet werden. Eine solche Profiltiefe für ein bestimmtes zu erfassendes Objekt kann z.B. z0 - zi mit i = 1 , 2 oder 3 sein oder im Falle mehrerer in verschiedenen Abständen zur Detektorebene z0 angeordneter Objekte z.B. z0 - zi - zj mit i, j = 1, 2 oder 3 und mit der Bedingung i ≠ j.

Dabei kann ferner vorgesehen sein, dass mindestens eine Bildfläche in dem dreidimensionalen Raum mit einer maximalen Überdeckung bzw. Übereinstimmung mit der genannten zweidimensionalen Projektionsfläche anhand eines Gütemaßes, bevorzugt mittels eines Optimierers, ermittelt wird. Das genannte Gütemaß kann dabei durch Berechnung einer Bilddifferenz gebildet werden, z.B. durch Berechnung eines kleinsten quadratischen Abstandes oder einer Gradienten-Differenz. Es ist hierbei hervorzuheben, dass es sich bei dem hierin beschriebenen Strahlengang bevorzugt um einen "virtuellen" Strahlengang bzw. eine "virtuelle" geometrische Anordnung von Strahlenquelle und Detektor handelt, da sich nach Erzeugung der hier betroffenen 2D- und 3D-Bilddaten bzw. bei deren erfindungsgemäßer Verarbeitung kein reales Objekt im Strahlengang befindet, sondern nur das durch eine genannte Bilderzeugungseinheit erzeugte Abbild (3D-Bilddaten) eines jeweiligen Objektes. So liegen auch eine hierin beschriebene Strahlenquelle und eine Bilderzeugungseinheit in Bezug auf die genannten Bildelemente nur rein virtuell vor.

Ferner kann vorgesehen sein, dass bei der Ermittlung einer Bildfläche mit einer maximalen Überdeckung bzw. Übereinstimmung in einem bestimmten Abstand in einem genannten virtuellen Strahlengang zwischen einer Strahlenquelle und einer Bilderzeugungseinheit eines hier betroffenen Bilderzeugungssystems aufgefundene Bildelemente ausgewertet werden, wobei bevorzugt ein Bildelement mit einem höchsten Beitrag oder eine bestimmte Gruppe von Bildelementen mit einem höchsten Beitrag entsprechend einem Gütemaß ermittelt wird. Ein genanntes Bildelement kann ein sogenannter "Voxel", d.h. ein volumenartiger Gitterpunkt bzw. Bildpunkt in einem dreidimensionalen Gitter, sein.

Hierdurch kann der Aussagewert einer IO-Aufnahme diagnostisch verbessert werden, da z.B. die räumliche Lage und/oder die Position einer Zahnwurzel in einen 3D-Kontext gesetzt werden können, denn diese anatomischen Strukturen sind im DVT mit geringerer Auflösung, jedoch mit höherer Tiefeninformation bekannt. Hierbei können die Bilddaten vorteilhaft in einem gemeinsamen Datenraum verrechnet werden, wobei die Verrechnung entweder in einem 2D- oder in einem 3D-Datenraum erfolgen kann. So wird die Verrechnung von 2D-Bilddaten bevorzugt in einem 3D-Datenraum erfolgen, wohingegen die Verrechnung von 3D-Bilddaten bevorzugt in einem 2D-Datenraum durchgeführt wird.

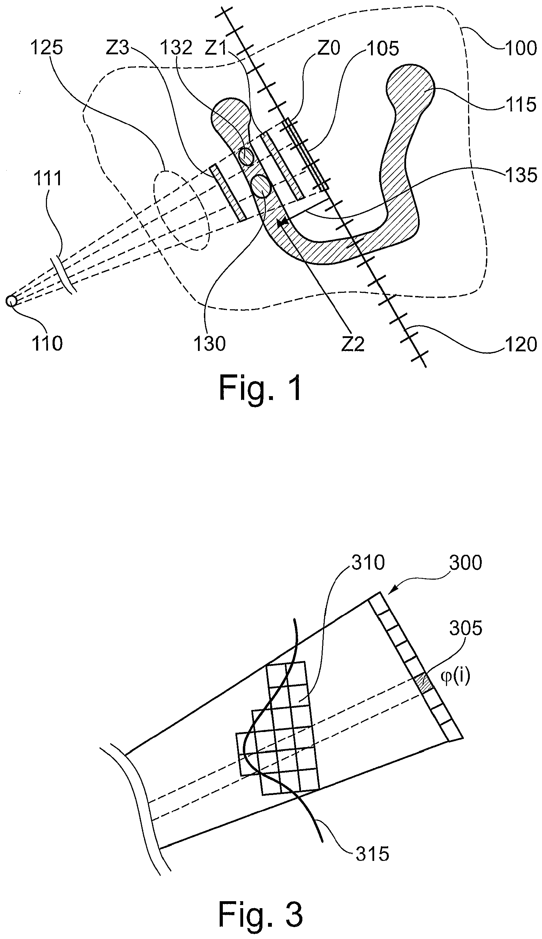

Eine mögliche Verrechnung in 2D ist gegeben, wenn der IO-Bildinhalt (Fig. 1, Bezugszeichen 105) z.B. für eine bestimmte Tiefe (Fig. 1 "Z3") von einer virtuellen Projektion aller in einem bestimmten Strahlengang liegenden Volumenelemente vor der besagten Volumen-Tiefe (Fig. 1, "Z3") subtrahiert wird. Hierdurch werden störende Objekte aus dem IO-Bild entfernt. Diese Form der Verrechnung, die sich auf das resultierende Bild auf dem 2D-Detektor bezieht, kann zusätzliche Tiefen-Informationen in ein sonst nicht Tiefen-Informationen beinhaltendes Bild integrieren. Die zusätzlichen Informationen können bevorzugt in Farbe dargestellt werden.

Eine Verrechnung in 3D ist gegeben, wenn der IO-Bildinhalt für einen bestimmten Strahlengang (Fig. 1, Bezugszeichen 110 und Fig. 1, Bezugszeichen 105) mittels einer gefilterten Rückprojektion zur Verbesserung der Auflösung der Volumenelemente in diesem Strahlengang führt. Diese Form der Verrechnung führt die Auflösung erhöhend zu entsprechenden Verbesserungen der 3D-Informationen.

Das erfindungsgemäße Verfahren ermöglicht zudem auf der Grundlage einer aus den 3D-Bilddaten berechneten Aufnahmegeometrie bei gegenüber der optischen Achse des verwendeten Strahlenbündels nicht-orthogonal erzeugten IO-Aufnahmen nachträglich die Durchführung einer perspektivischen Korrektur, obwohl in dieser Aufnahmesituation die Richtung der Profiltiefe einzelner Tiefenschichten nicht mehr parallel zum Detektor bzw. Sensor angeordnet bzw. ausgerichtet ist.

Auch ermöglicht das erfindungsgemäße Verfahren eine nachträgliche Korrektur von 3D-Bilddaten (z.B. DVT) mittels Verrechnung dieser Daten mit 2D-Bilddaten (z.B. IO-Bilder), um die Bildqualität der 3D-Bilddaten zu verbessern. So können die gegenüber den 3D-Daten relativ hochauflösenden 2D-Bilddaten zumindest im Bereich des zu erfassenden Objekts bzw. Struktur so mit den 3D-Bilddaten verrechnet werden, dass das Objekt bzw. die Struktur nachträglich höher aufgelöst dargestellt werden kann, wobei der Vorteil der räumlichen Auflösung der 3D-Daten bestehen bleibt.

Mit dem erfindungsgemäßen Verfahren können daher insbesondere anatomische Strukturen wie Zahnwurzeln, Paradontalspalte oder dergleichen, welche in einem IO-Bild sehr scharf und hochaufgelöst, jedoch ohne räumliche Informationen abgebildet werden, gleichzeitig hochaufgelöst und mit räumlicher Tiefe dargestellt bzw. begutachtet werden. So kann beispielsweise bestimmt bzw. ermittelt werden, ob eine bestimmte Zahnwurzel im Mundraum eines Patienten proximal oder distal positioniert ist. Des Weiteren ist es möglich, in diesem Kontext sonst nicht präzise mögliche Messungen durchzuführen, da z.B. die hochauflösende Position der Wurzelspitze in einen 3D-Kontext gesetzt werden kann und somit die Länge des Wurzelkanals nicht in einer 2D-Projektion, sondern in einem 3D-Raum mit verbesserter räumlicher Auflösung, ermittelt werden kann.

Bei dem erfindungsgemäßen Verfahren kann ferner vorgesehen sein, dass mindestens eine in wenigstens einer Bildfläche mit einer bestimmten Profiltiefe bei der Bilderzeugung vorgelegene, den Strahl beeinflussende Struktur mittels der dreidimensionalen Bilddaten aus den zweidimensionalen Bilddaten nachträglich herausgerechnet wird. Dadurch können im Strahlkegel liegende, die Erzeugung eines genannten IO-Bildes für ein zu untersuchendes Objekt beeinflussende bzw. die Abbildung des zu untersuchenden Objekts verfälschende Strukturen bzw. andere Objekte, welche die Bildqualität des IO-Bildes verschlechtern, aus den bereits vorliegenden IO-Bilddaten nachträglich extrahiert bzw. herausgelöscht werden.

Bei dem erfindungsgemäßen Verfahren kann auch vorgesehen sein, dass eine bei der Bilderzeugung vorgelegte Verkippung des Strahlendetektors gegenüber der optischen Achse des von der Strahlenquelle erzeugten Strahls mittels perspektivischer Korrektur anhand von dreidimensionalen Bilddaten nachträglich korrigiert wird. Dadurch können für die Bildqualität eines genannten IO-Bildes ungünstige Aufnahmebedingungen bevorzugt nachträglich korrigiert werden.

Bei dem erfindungsgemäßen Verfahren kann ferner vorgesehen sein, dass eine genannte Bildfläche oder Gruppe von genannten Bildflächen eines durch dreidimensionale Bilddaten repräsentierten dreidimensionalen Bildes, welche einen Maximalbeitrag zu einem zweidimensionalen Bild liefert, als Messraum benutzt wird, um in dem zweidimensionalen Bild maßstabsgetreue Messungen durchführen zu können.

Bei dem erfindungsgemäßen Verfahren kann zudem vorgesehen sein, dass dreidimensionale Bilddaten mit höher auflösenden zweidimensionalen Bilddaten verrechnet werden, um die räumliche Auflösung der dreidimensionalen Bilddaten senkrecht zur Projektionsrichtung zu verbessern.

Es ist anzumerken, dass die genannten 2D-Bilddaten bevorzugt Röntgenprojektionsbilder ohne räumlichen Bezug und die genannten 3D-Bilddaten bevorzugt räumliche Ortsinformationen beinhalten, so dass jeder Bildpunkt der 3D-Bilddaten eindeutig einem 3D-Raumpunkt zugewiesen werden kann.

Zudem ist anzumerken, dass die genannten 2D-Bilddaten und die 3D-Bilddaten auch Oberflächendaten sein können oder aus anderen Modalitäten stammen können, z.B. aus tomographischen Schichtaufnahmen, aus Orthopantomogrammen (PAN), aus MRT-Aufnahmen, aus optischen Oberflächenaufnahmen (Face-Scans), aus DVT-Aufnahmen oder aus CT-Aufnahmen entsprechend erfassten Objektoberflächen.

Die genannte Verrechnung der zweidimensionalen Bilddaten und der dreidimensionalen Bilddaten kann mittels Blending, Addition, Differenzbildung, durch gewichtete Addition oder Subtraktion, oder durch eine Kombination der genannten Operatoren oder durch ähnliche Operatoren, erfolgt. Solche grundlegenden Operatoren lassen sich kostengünstig und mit relativ geringer Rechenleistung implementieren. Bei dem genannten Blending kann es sich zudem um ein Gradienten-basiertes Blending bzw. ein (un)scharfes Maskieren handeln.

Es ist hervorzuheben, dass das erfindungsgemäße Verfahren von der Art der verwendeten Strahlen bei der Aufnahme der genannten 2D-Bilddaten und/oder 3D-Bilddaten unabhängig ist. Nur exemplarisch wird dabei auf an sich bekannte Verfahren aus den Bereichen Röntgen- oder Nukleardiagnostik, z.B. der Kernspin-Tomographie (MRI), oder anderen diagnostischen Methoden wie z.B. die Ultraschalldiagnostik, die Dentaldiagnostik mittels 3D-Oberflächen-Abrasterung (scanning), oder solchen diagnostischen 3D-Verfahren, die auf der Anwendung bzw. Anbringung von räumlichen (z.B. intraoralen) Markern beruhen, z.B. an Zähnen zusätzlich angebrachten metallischen Markern oder bestehenden Zahnstrukturen wie Füllungen, Inlays, Onlays, oder dergleichen, hingewiesen. Das erfindungsgemäße Computerprogramm ist eingerichtet, jeden Schritt des Verfahrens durchzuführen, insbesondere wenn es auf einem Rechengerät abläuft. Es ermöglicht die Implementierung des erfindungsgemäßen Verfahrens in einem herkömmlichen dentalmedizinischen Bilderzeugungssystem, ohne an diesen baulichen Veränderungen vornehmen zu müssen. Hierzu ist der maschinenlesbare Datenträger vorgesehen, auf welchem das erfindungsgemäße Computerprogramm gespeichert ist. Durch Aufspielen des erfindungsgemäßen Computerprogramms auf ein dentalmedizinisches Bilderzeugungssystem wird ein erfindungsgemäßes dentalmedizinisches Bilderzeugungssystem erhalten, welches eingerichtet ist, um eine Bilderzeugung bzw. Bilddarstellung mittels des erfindungsgemäßen Verfahrens durchzuführen.

Kurze Beschreibung der Zeichnungen

Fig. 1 zeigt eine geometrische Messanordnung zur Ermöglichung einer erfindungsgemäßen Profil-Tiefen-Variationsberechnung.

Fig. 2 zeigt eine geometrische Messanordnung zur Erfassung eines genannten zweidimensionalen IO-Bildes.

Fig. 3 zeigt einen Ausschnitt der in Fig. 2 gezeigten Messanordnung zur Illustration von im Strahlenweg befindlichen Volumenelementen.

Fig. 4 zeigt ein Ausführungsbeispiel einer erfindungsgemäßen nachträglichen Korrektur eines zweidimensionalen IO-Bildes, welche aufgrund einer während der Aufnahme stattgefundenen räumlichen Verkippung des Detektors gegenüber der Strahlenquelle erforderlich ist.

Fig. 5 zeigt schematisch eine erfindungsgemäße Zuordnung von Bildpunkten in einem dreidimensionalen Raum mit Bildpunkten einer zweidimensionalen Projektionsfläche.

Ausführungsbeispiele

Fig. 1 zeigt schematisch die perspektivische Geometrie bzw. Projektionssituation bei der Aufnahme eines intraoral erstellten 2D-Bildes ("IO-Bildes") mittels eines im Mundraum 100 eines Patienten angeordneten Röntgendetektors 105 sowie einer außerhalb des Mundraums 100 angeordneten Röntgenquelle 110. Entsprechend der Linienunterbrechung 111 ist die Entfernung der Röntgenquelle 110 nicht maßstabsgetreu dargestellt und in der Realität vom Detektor 105 erheblich weiter entfernt angeordnet. Der Mundraum 100 ist vorliegend in einer Draufsicht eines nur schematisch dargestellten Kieferbogens 115 angedeutet. Die räumliche Lage der Detektorebene entspricht in diesem Beispiel in etwa der hier zur Vereinfachung gerade dargestellten Detektorebene 120 mit konstanter Strahlenintensität, welche in der Realität entsprechend der kugelförmigen Ausbreitung des Strahlenbündels bzw. Strahlenkegels 125 entsprechend gekrümmt sein wird, jedoch bei relativ großem Abstand zum Detektor 105, wie vorliegend unter Hinweis auf die Linienunterbrechung 111 erfüllt, in dem vorliegenden Ausführungsbeispiel zu einer gezeigten Gerade 120 entartet ist. Es ist aber anzumerken, dass die Detektorebene 120 zwar bei modernen Flachbild-Detektoren gerade ausgebildet ist. Jedoch gibt es auch spezielle Detektoren, bei denen die Detektorebene als gekrümmte Fläche ausgebildet ist. Auch bei zuletzt genannten Detektoren ist die vorliegende Erfindung einsetzbar.

In Fig. 1 sind in dem durchstrahlten Bereich des Kieferbogens 115 zusätzlich zwei Zähne 130, 132 angeordnet, welche in dem vorliegenden diagnostischen Szenario die eigentlichen Untersuchungsobjekte darstellen und welche daher mit möglichst hoher Bildqualität röntgenographisch aufgenommen werden sollen.

Aus den in Fig. 1 nur exemplarisch gezeigten drei Bildebenen $z_1$, $z_2$ und $z_3$ sowie der Detektorebene $z_0$ ergibt sich vorliegend für die beiden zu untersuchenden Objekte 130, 132 eine in Fig. 1 durch den Pfeil 135 angedeutete Profiltiefe $z_2$ und damit in der Detektorebene $z_0$ eine entsprechende Profiltiefenvariation von $z_0 - z_2$.

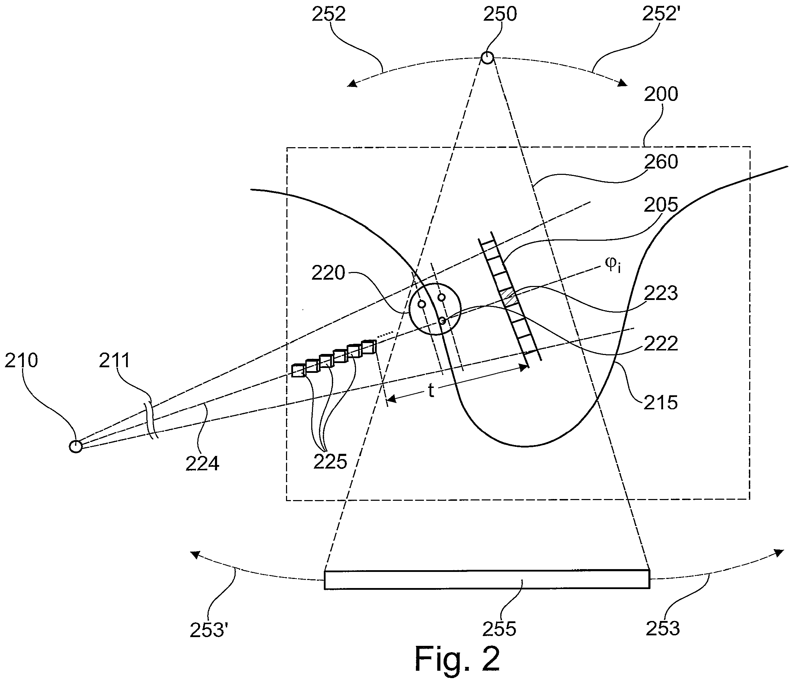

Durch eine perspektivisch korrekte Verschiebung ist eine Verrechnung der jeweiligen Bildebene bzw. Schicht $z_0$, $z_1$, $z_2$ bzw. $z_3$ anhand der aus einer DVT-Untersuchung (siehe Fig. 2) sich ergebenden Bilddaten möglich, wobei sich die Summe der Beiträge aus der IO-Geometrie als logarithmisches Summenbild ergeben. Die Schicht $z_2$ mit der maximalen Überdeckung mit dem zu untersuchenden medizinischen Objekt bzw. der Struktur, in dem vorliegenden Ausführungsbeispiel die beiden Zähne 130, 132 bzw. die aus diesen Zähnen 130, 132 gebildete Zahnreihe, welche aufgrund der Strahlenabsorption einen maximalen Bildbeitrag liefert, kann daher mittels eines an sich bekannten Optimierers automatisch gefunden werden. Hierbei werden z.B. mittels einer globalen Suche in einem bestimmten Abstand delta-V im Strahlengang zwischen Strahlenquelle 110 und Detektor 105 aufgefundene Voxel ausgewertet. Bei einem "Voxel" (zusammengesetzt aus volumetric und pixel) handelt es sich bekanntermaßen um einen volumenartigen Gitterpunkt bzw. Bildpunkt in einem dreidimensionalen Gitter. Delta_V kann dabei z.B. der halben Voxelgröße entsprechen. Bei dieser Auswertung kann der Voxel mit dem höchsten Beitrag oder eine bestimmte Gruppe von Voxeln mit dem höchsten Beitrag ermittelt werden. Die Position des Voxels oder die mittlere Position der Voxelgruppe entspricht damit der gesuchten Profil-Tiefe. Es ist dabei grundsätzlich möglich, an Stelle der genannten globalen Suche jeden anderen Löser aus der Klasse Optimierungsprobleme, z.B. das an sich bekannte Verfahren der konjugierten Gradienten, zu verwenden.

Die beschriebene Methode der Profil-Tiefen-Variation wird, wie im Folgenden beschrieben, erfindungsgemäß zur die Bildqualität verbessernden Korrektur hier betroffener 2D- oder 3D-Bilddaten eingesetzt. Ein zweidimensionales IO-Bild nimmt perspektivisch gesehen entlang dem gezeigten Strahlenkegel 125 eine Position ein, welche der tatsächlichen Aufnahmeposition entspricht, d.h. das erzeugte IO-Bild entspricht einer Ansicht in der Detektorebene 120 des Detektors 105 im Mundraum 100. Da das resultierende Röntgenbild in dieser Ebene 120 einer Ackumulation bzw. Integration aller z.B. an den Schichten $z_1$ bis $z_3$ lokal auftretenden Strahlenabsorptionen entlang des Röntgenstrahls 125 entspricht, kann der Anwender bzw. behandelnde Arzt das IO-Bild durch Verrechnung der zweidimensionalen IO-Bilddaten mit zusätzlich verfügbaren dreidimensionalen Bilddaten (z.B. genannte DVT-Daten) so mittels der genannten Profil-Tiefen-Variation korrigieren, dass die Bildqualität des IO-Bildes nachträglich erheblich verbessert wird.

So kann eine z.B. in der Schicht $z_1$ und/oder der Schicht $z_3$ bei der Aufnahme bzw. Datenerfassung vorgelegene, den Röntgenstrahl absorbierende Struktur (Knochenstruktur, Zahnersatz, oder dergleichen) aus den IO-Bilddaten herausgerechnet werden, wodurch die in der Schicht $z_2$ gemessenen Daten der beiden Zähne 130, 132 entsprechend korrigiert werden und dadurch deren Bildqualität erheblich verbessert wird. Auch kann bei einer während der Aufnahme vorgelegenen Verkippung des Detektors gegenüber der optischen Achse des Strahlenbündels 125 nachträglich eine entsprechende perspektivische Korrektur durchgeführt werden, wodurch die Bildqualität des IO-Bildes sich ebenfalls erheblich verbessert.

Umgekehrt ermöglicht das hierin beschriebene Verfahren eine Korrektur von 3D-Bilddaten (z.B. DVT) mittels Verrechnung dieser Daten mit 2D-Bilddaten (z.B. IO-Bilder), um die Bildqualität der 3D-Bilddaten zu verbessern. So können die gegenüber den 3D-Daten relativ hochauflösenden 2D-Bilddaten zumindest im Bereich des zu erfassenden Objekts bzw. der zu erfassenden Struktur so mit den 3D-Bilddaten verrechnet werden, dass das Objekt bzw. die Struktur nachträglich höher aufgelöst dargestellt werden kann, wobei der Vorteil der räumlichen Auflösung der 3D-Daten bestehen bleibt. Es ist anzumerken, dass die typische (laterale) Messauflösung bei hier betroffenen 2D-Bilddaten etwa 10 - 20 $\mu$m beträgt, im Gegensatz zu einer Messauflösung von typisch etwa 100 - 150 $\mu$m im Falle von 3D-Bilddaten.

Es ist anzumerken, dass die genannte Verrechnung der 2D- und 3D-Bilddaten auch ein Blending, eine Addition, eine Differenzbildung, oder ein sonstiger bildverarbeitender Operator sein kann, welcher dem Anwender bzw. dem behandelnden Arzt einen auf den jeweiligen Patienten besser abgestimmten bzw. besser fallbezogenen diagnostischen Mehrwert bietet.

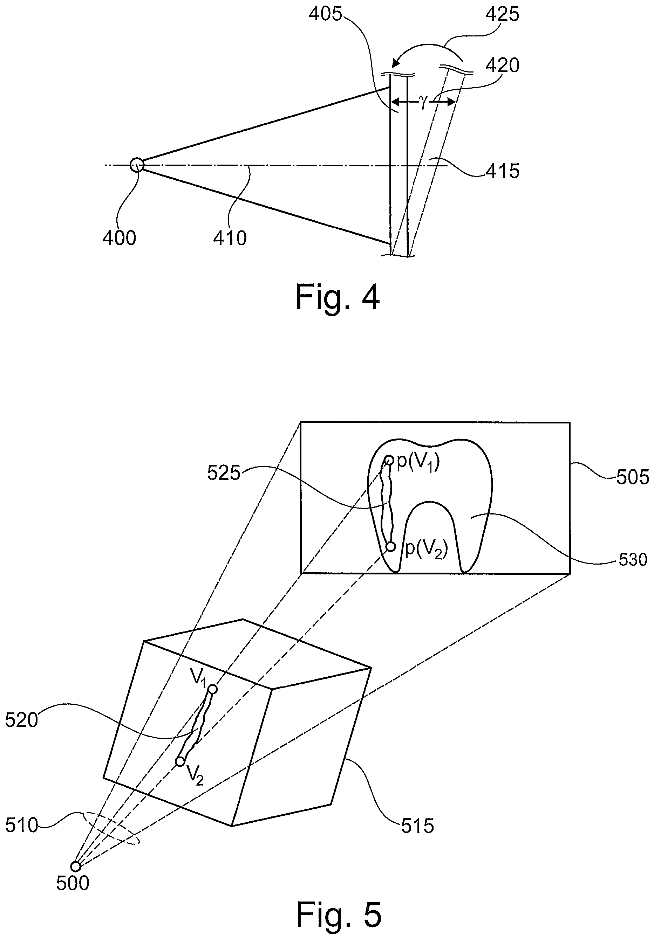

Zur genannten geometrischen Verrechnung der 2D- und 3D-Bilddaten können Bildpunkte in einem dreidimensionalen (3D-) Raum mit Bildpunkten einer zweidimensionalen (2D-) Projektionsfläche zugeordnet werden. Eine solche Zuordnung ist schematisch in Fig. 5 dargestellt. Ein von einer Strahlenquelle 500 ausgesandtes Strahlenbündel 510 mit einem vorliegend pyramidalen Sichtfeld wird von einem 2D-Detektor 505 erfasst. Mit 515 ist ein Teilvolumen bezeichnet, welches ein in 2D abgebildetes Objekt 530 repräsentiert. Die im Teilvolumen 515 schematisch eingezeichnete räumliche Punktverteilung ("Punktwolke") 520 mit Endpunkten V1 und V2 kann mittels des 2D-Detektors 505 die ebene Punktverteilung ("Punktwolke") 525 mit entsprechenden Endpunkten p(V1) und p(V2) zugeordnet werden. Die genannten Bildpunkte im genannten 2D-Raum 525 und die genannten Bildpunkte 520 im 3D-Raum können dabei auch Punkte auf Bildflächen darstellen, wobei Ebenen, gekrümmte Flächen oder sogar einzelne Punkte bzw. Punktwolken umfasst sein können. Bevorzugt handelt es sich dabei um ebene Bildflächen.

Fig. 2 zeigt eine der Fig. 1 ähnliche geometrische Aufnahme- bzw. Projektionssituation zur Erfassung eines genannten zweidimensionalen IO-Bildes, jedoch in der vorliegenden Darstellung nur die Schnittebene mit einer nachfolgend beschriebenen 3D-Bilddatenschicht ("Tomogramm") 200, die sich aus zweidimensionalen Einzelbildern zusammensetzt, welche jeweils als Röntgenbild am Ort eines Detektors 255 erfasst werden. Aus der Summe aller erfassten Einzelbilder wird dann ein solches Tomogramm 200 ermittelt.

Eingezeichnet sind wiederum ein im Mundraum eines Patienten angeordneter Röntgendetektor 205, eine entsprechende Strahlenquelle 210, schematisch vereinfacht der Kieferbogen 215 des Patienten sowie in dem vorliegenden Beispiel nur ein einziges zu bestrahlendes bzw. zu untersuchendes Objekt, und zwar nur ein einzelner Zahn 220 des Patienten. Mit dem Bezugszeichen 211 wird wieder angedeutet, dass die Strahlenquelle 210 erheblich weiter entfernt vom Detektor 205 angeordnet ist, als in dieser Darstellung gezeigt.

Bei der dreidimensionalen Bilderfassung mittels eines genannten DVT-Verfahrens rotieren eine Röntgenröhre 250 sowie ein gegenüberliegender digitaler (zweidimensionaler) Bildsensor bzw. Detektor 255, der über eine röntgenempfindliche Szintillator-Schicht verfügt, um 180 bis 360 Grad um den (hier nicht dargestellten) Patienten herum 252, 252', 253, 253'. Die rotierende Röntgenröhre 250 sendet dabei einen kegelförmigen, meist gepulsten Röntgenstrahl mit einem (räumlichen) Strahlfächer 260 aus. Während des Umlaufs der Röntgenröhre 250 wird eine Vielzahl von genannten zweidimensionalen Tomogrammen 200 aufgenommen und aus diesen Röntgenaufnahmen in an sich bekannter Weise ein 3D-Bilddatensatz ermittelt.

Es ist hervorzuheben, dass sich in der in Fig. 2 gezeigten Aufnahmesituation, d.h. zum Zeitpunkt der Erfassung des vorliegenden Tomogramms 200, die Röntgenröhre 250 oberhalb der (gedachten) Papierebene und der Detektor 255 unterhalb der (gedachten) Papierebene befinden.

Eine in dem in Fig. 2 gezeigten Beispielszenario im unteren Bereich des Zahns 220 angeordnete Objekt-Substruktur 222 stellt einen von drei Wurzelkanälen des Zahns 220 dar. Bezüglich dieser Substruktur 222 ergibt sich ein am Detektor 205 vorliegender Strahlenwert 223 als Strahlenintegral $\varphi(i)$ durch die entlang des entsprechenden Strahlwegs 224 angeordnete i Volumenelemente vi 225, welche insbesondere aus den 3D-Bilddaten der gezeigten Bilddatenschicht bekannt sind. Durch die in den einzelnen Volumenelementen vi 225 jeweils stattfindende Strahlenabsorption ergibt sich daher insgesamt eine Schwächung (im Falle von Röntgenstrahlen eine Röntgenschwächung) des von der Strahlenquelle 210 abgegebenen Strahls für das betrachtete Winkelsegment $\varphi$ 223 des Detektors 205 gemäß der folgenden Gleichung (1), dem sogenannten Schwächungsgesetz, in der das Integral $\int$ über die im gesamten Strahlweg 224 liegenden i Volumenelemente gebildet wird:

$$\varphi(i) = I0 * \exp\left(- \int vi \, dv\right), \qquad (1)$$

wobei I0 die gemessene Strahlung in der Detektoreinheit für eine Messsituation beschreibt, in der keine Absorption vorliegt und die Messergebnisse nur monoenergetisch betrachtet werden.

Die in Fig. 2 gezeigten Volumenelemente vi 225 liegen außerhalb einer Profiltiefe t. Damit ergibt sich gemäß Gleichung (1) für diese Profiltiefe am Detektorsegment i ein Strahlendämpfungswert D(i) von

$$D(i) = I0 * \exp (- \int vi \, dv), \qquad (2)$$

wobei i ≠ t gilt. Mit Hilfe der Gleichung (2) lässt sich somit durch Kombination der 2D-Bilddaten mit den 3D-Bilddaten ein IO-Bild für eine bestimmte Profiltiefe t berechnen. Anhand der aus den 3D-Bilddaten sich auch ergebenden in Fig. 2 gezeigten Projektionssituation, aufgrund der Kenntnis der Beziehung zwischen allen i Volumenelementen entlang eines Strahlweges 224, sowie anhand der am Ende des Strahlweges 224 vorliegenden integralen IO-Bilddaten, können aus den IO-Bilddaten die Strahldämpfungs- bzw. Schwächungsanteile eines oder mehrere Volumenelemente abgezogen bzw. herausgerechnet werden. Bei solchen Volumenelementen kann es sich um unerwünschte Objekte oder Strukturen bzw. Störungen handeln, z.B. Knochenteile eines Kiefers. Die Auswertung der Gleichungen (1) und (2) kann bei Kenntnis des Spektrums und der Betrachtung für jede Energie zusätzlich verfeinert werden, in dem z.B. alle Energien des Röntgenspektrums wie folgt berücksichtigt werden:

$$\varphi\_Gesamt(i) = \int I0(E) * \exp (- \int vi \, (E) dv) \, dE \qquad (3)$$

Liegen entsprechende Spektralwerte nicht vor, so kann bevorzugt ein mittleres Spektrum mono-energetisch nach den Gleichungen (1) und (2) berücksichtigt werden.

Um die IO-Bildqualität des in Fig. 2 gezeigten Zahns 220 bzw. der Wurzel 222 zu verbessern können, wie in Fig. 3 für mehrere Strahlwege gezeigt, entlang des jeweiligen Strahlweges 224 nur die Volumenelemente mit der maximalen Absorption dieses Zahns 220 bzw. der Wurzel 222 bei der Berechnung eines entsprechend korrigierten IO-Bildes berücksichtigt werden und alle anderen Volumenelemente ausgeblendet bzw. von den ursprünglichen IO-Bilddaten arithmetisch abgezogen werden.

Fig. 3 zeigt einen Ausschnitt der in Fig. 2 gezeigten Messanordnung zur Illustration der am Detektor 300 für sämtliche Strahlwege innerhalb des Strahlkegels aufgrund von im jeweiligen Strahlenweg befindlichen absorptiven Volumenelementen insgesamt sich ergebenden Messkurven. In Fig. 3 ist wieder das in Fig. 2 gezeigte betrachtete Winkelsegment φ(i) 305 eingezeichnet. Die gezeigten Volumenelemente 310 überlappen mit dem in Fig. 2 gezeigten Zahn 220. Um daher den Zahn 220 mit erfindungsgemäß verbesserter Bildauflösung am Detektor 300 darzustellen, werden nur diese Volumenelemente 310 in den IO-Bilddaten berücksichtigt und alle anderen im Strahlweg befindlichen Volumenelemente ausgeblendet. Die eingezeichnete Hüllkurve 315 stellt für dieses Objekt 220 die Maximumlinie entlang der am Detektor 300 vorliegenden verschiedenen (benachbarten) Winkelsegmente φ(i) dar.

Fig. 4 zeigt ein Ausführungsbeispiel einer erfindungsgemäßen nachträglichen Korrektur eines IO-Bildes, welche aufgrund einer räumlichen Verkippung des Detektors gegenüber der Strahlenquelle bzw. der optischen Strahlenachse während der Aufnahme erforderlich ist. Dabei macht man sich zunutze, dass die 3D-Bilddaten die Bestimmung der genauen Orientierung des Detektors ermöglichen. Damit lassen sich durch eine genannte Verkippung verursachte Bildverzerrungen nachträglich korrigieren.

In Fig. 4 ist wieder eine Messanordnung bzw. Projektionssituation mit einer Strahlenquelle 400 und einem Strahlendetektor 405 dargestellt. Zusätzlich eingezeichnet ist die durch den Strahlkegel definierte optische Achse 410. Im Idealfall würde der Detektor die gezeigte Lage 405 einnehmen, wobei der Detektor 405 in der vorliegenden Messsituation gegenüber der ideal orthogonalen Anordnung gegenüber der optischen Achse 410 um einen Kippwinkel γ 420 verkippt angeordnet ist 415. Es ist anzumerken, dass der Kippwinkel 420 in dieser Darstellung nur in der Papierebene gebildet ist, in der Realität aber auch einen senkrecht zur Papierebene gebildeten Winkelanteil beinhalten kann, wobei sich diese räumlichen Informationen aus den 3D-Bilddaten ergeben. Eine erfindungsgemäß durchgeführte Winkeltransformation gemäß dem Pfeil 425 macht die aufgrund der Verkippung 420 hervorgerufenen Bildverzerrungen rückgängig.

Um eine entsprechende Korrekturrechnung durchzuführen, wird ein orthogonaler virtueller Detektor 405, der einen Kippwinkel γ, so erfüllt, dass die Normale des neuen Detektors eine Gerade durch den Strahler-Mittelpunkt beschreiben kann, aufgespannt. Nun werden alle Informationen, die auf dem originalen Detektor verfügbar sind, mittels einer ungefilterten Rückprojektion in den Raum, der durch den Strahlenkegel vom Strahler 400 ausgehend abgedeckt wird, zurück projiziert. Diese Information wird bevorzugt in einem hochabgetasteten diskreten Voxel-Raum gepuffert bzw. zwischengespeichert, um in einem zweiten Schritt mittels einer virtuellen Projektion entlang von virtuellen Strahlen 410 gemäß den Gleichungen (1) und (3) ein virtuelles korrigiertes Bild am Ort 405 zu erzeugen.

Um durch das Gitter des gepufferten Volumens bedingte Interpolationsartefakte und Aliasing zu reduzieren, kann bevorzugt bei der Simulation des Röntgenbildes 405 ein ausgedehnter, nicht-punktförmiger Strahler 400 verwendet werden.

Die Erfindung ermöglicht auch gegenüber dem Stand der Technik verbesserte Messungen bzw. eine verbesserte Messbarkeit in 2D. Aus einem 2D-Röntgenbild, insbesondere aus einem IO-Bild, können keine Tiefeninformationen bestimmt bzw. ermittelt werden, da die Position des Objektes, sowie die Anordnung von Strahler und Detektor variieren kann und damit unbekannte Vergrößerungen und Verzerrungen auftreten können. So kann die Länge eines Zahnes oder die Breite eines Paradontalspaltes nur geschätzt werden. Wird der Zahn oder der Paradontalspalt jedoch einer bestimmten Profil-Tiefe in 3D zugeordnet, kann dort die Länge, bevorzugt in mm, ermittelt werden und mittels eines Messwerkzeuges in einem korrespondierenden, in der Regel einem entsprechend verzerrten 2D-Bild, zugänglich gemacht werden.

Genannte 3D-Volumeninformationen werden, je nach Rekonstruktionstechnik, aus einer Reihe von 2D-Projektionen gewonnen. Zur Korrektur von 3D-Volumen kann das IO-Bild, z.B. mittels gefilterter Rückprojektion, entlang des Strahlenganges eines jeden Detektor-Bild-Pixels auf einzelne existierende Volumenelemente aufaddiert werden. Hierfür ist es zweckmäßig, das Volumen in dem jeweils betrachteten Bereich höher abzutasten, um die höhere Auflösung des IO-Bildes verwenden zu können. Da die Verwischung bzw. Rückprojektion nur aus einer Richtung erfolgt, ist das Gewicht (0 - 100%) der Rückprojektion zu erhöhen, damit der Benutzer den Vergleich zur Auflösungsänderung z.B. dynamisch einstellen kann. Zudem ist es möglich, ähnlich wie bei der beschriebenen Profil-Tiefen-Variation in 2D, eine Gruppe von Voxeln zu bestimmen und die Rückprojektion nur auf die so bestimmte Gruppe anzuwenden, um die zusätzliche Auflösung nur lokal auf das Volumen z.B. eines einzelnen Zahns zu übertragen. Da die Verwischung bzw. Rückprojektion nur aus einer Richtung erfolgt, ergibt sich dabei nur eine Auflösungserhöhung orthogonal zur Richtung der Projektion.

Eine beschriebene Korrektur von 3D-Bilddaten (z.B. DVT) mittels 2D-Bilddaten (z.B. IO-Bild) erfolgt z.B. nach der bereits genannten Methode der Rückprojektion ("Backprojection") und/oder nach der ebenfalls bekannten Methode der "Radon Transformation".

Das beschriebene Verfahren kann in Form eines Steuerprogramms für ein hier betroffenes Bilderzeugungs- bzw. Bilddarstellungssystem oder in Form einer oder mehrerer entsprechender elektronischer Steuereinheiten (ECUs) realisiert werden.

## Patentansprüche

1. Verfahren zur Verarbeitung von Bilddaten eines dentalmedizinischen Bilderzeugungssystems, welches eine erste Bilderzeugungseinheit (205, 210) zur Erzeugung von zweidimensionalen Bilddaten sowie eine zweite Bilderzeugungseinheit (250, 255) zur Erzeugung von dreidimensionalen Bilddaten aufweist, wobei das Bilderzeugungssystem für ein zu untersuchendes Objekt (220, 222) sowohl zweidimensionale Bilddaten als auch dreidimensionale Bilddaten bereitstellt, wobei die zweidimensionalen Bilddaten und die dreidimensionalen Bilddaten miteinander verrechnet werden, wobei dass die dreidimensionalen Bilddaten anhand von geometrischen Aufnahmebedingungen mittels eines bildverarbeitenden Operators miteinander verrechnet werden und dass die sich aus der Verrechnung ergebenden Bilddaten visualisiert werden, wobei dass die Verrechnung geometrisch anhand einer 2D/3D-Registrierung erfolgt, wobei die Beziehung zwischen einer Lage und Orientierung eines Detektors und einer Strahlenquelle in Bezug auf ein zu untersuchendes dreidimensionales Objekt berechnet wird, und dass anhand einer Profil-Tiefen-Variation eine Profiltiefe berechnet wird, um zu ermitteln, welche Objekte im Strahlengang von der Strahlenquelle zu einem gegebenen Bildpunkt welchen Beitrag liefern, wobei dass mindestens eine in wenigstens einer Bildfläche bei der Bilderzeugung vorgelegene, den von einer Strahlenquelle erzeugten Strahl beeinflussende Struktur mittels der dreidimensionalen Bilddaten aus den zweidimensionalen Bilddaten nachträglich herausgerechnet wird, wobei die Strahldämpfungs- bzw. Schwächungsanteile eines oder mehrere Volumenelemente abgezogen bzw. herausgerechnet werden.

2. Verfahren nach Anspruch 1, **dadurch gekennzeichnet, dass** der bildverarbeitende Operator zur Verrechnung der zweidimensionalen Bilddaten und der dreidimensionalen Bilddaten durch Blending, Addition oder Subtraktion, durch gewichtete Addition oder gewichtete Subtraktion, oder durch eine Kombination dieser, gebildet wird.

3. Verfahren nach einem der vorhergehenden Ansprüche, **dadurch gekennzeichnet, dass** zur Verrechnung der zweidimensionalen und der dreidimensionalen Bilddaten Bildpunkte in einem dreidimensionalen Raum Bildpunkten einer zweidimensionalen Projektionsfläche zugeordnet werden.

4. Verfahren nach Anspruch 3, **dadurch gekennzeichnet, dass** mindestens eine aus genannten Bildpunkten gebildete Bildfläche in dem dreidimensionalen Raum mit einer maximalen Übereinstimmung mit der zweidimensionalen Projektionsfläche anhand eines Gütemaßes mittels eines Optimierers ermittelt wird.

5. Verfahren nach Anspruch 4, **dadurch gekennzeichnet, dass** bei der Ermittlung einer Bildfläche mit einem maximalen Beitrag zur zweidimensionalen Projektionsfläche dreidimensionale Bildelemente ausgewertet werden, die in einem bestimmten Abstand in einem virtuellen Strahlengang zwischen einer Strahlenquelle des Bilderzeugungssystems und einer genannten Bilderzeugungseinheit (205, 210, 250, 255) aufgefunden werden.

6. Verfahren nach Anspruch 5, **dadurch gekennzeichnet, dass** bei der genannten Auswertung ein Bildelement mit einem höchsten Beitrag oder eine bestimmte Gruppe von Bildelementen mit einem höchsten Beitrag ermittelt wird.

7. Verfahren nach einem der vorhergehenden Ansprüche, **dadurch gekennzeichnet, dass** bei einer Verrechnung der zweidimensionalen Bilddaten der Bildinhalt der zweidimensionalen Bilddaten für eine vorgebbare Profiltiefe von einer virtuellen Projektion aller in einem vorgebbaren Strahlengang liegenden Volumenelemente von der vorgegebenen Profiltiefe subtrahiert wird.

8. Verfahren nach Anspruch 7, **dadurch gekennzeichnet, dass** die Auswertung der Volumenelemente an-hand eines Strahlenintegrals $\varphi(i)$ erfolgt, wobei eine durch entlang des Strahlengangs (224) angeordnete Volumenelemente (225) bewirkte Strahlenabsorption des von der Strahlenquelle (210) abgegebenen Strahls für ein betrachtetes Winkelsegment $\varphi$ (223) des Detektors (205) anhand eines Schwächungsgesetzes berechnet wird.

9. Verfahren nach einem der Ansprüche 1 bis 7, **dadurch gekennzeichnet, dass** zur Verrechnung der dreidimensionalen Bilddaten der Bildinhalt der zweidimensionalen Bilddaten für einen bestimmten Strahlengang einer Strahlenquelle anhand einer gefilterten Rückprojektion berechnet wird.

10. Verfahren nach einem der vorhergehenden Ansprüche, **dadurch gekennzeichnet, dass** eine bei der Bilderzeugung der zweidimensionalen Bilddaten vorgelegene Verkippung (415, 420) eines Strahlendetektors (400) gegenüber der optischen Achse (410) des von einer Strahlenquelle (400) erzeugten Strahls mittels perspektivischer Korrektur anhand von dreidimensionalen Bilddaten korrigiert wird (425).

11. Verfahren nach einem der Ansprüche 4 bis 9, **dadurch gekennzeichnet, dass** eine bestimmte Bildfläche oder bestimmte Gruppe von Bildflächen eines durch dreidimensionale Bilddaten repräsentierten dreidimensionalen Bildes, welche einen Maximalbeitrag zu einem zweidimensionalen Bild liefert, als Messraum benutzt wird, um in dem zweidimensionalen Bild maßstabsgetreu zu messen, wobei die Bildpunkte im 2D-Raum und die genannten Bildpunkte im 3D-Raum dabei auch Punkte auf Bildflächen darstellen können, wobei Ebenen, gekrümmte Flächen oder sogar einzelne Punkte bzw. Punktwolken umfasst sein können, bevorzugt handelt es sich dabei um ebene Bildflächen.

12. Verfahren nach einem der Ansprüche 1 bis 6, **dadurch gekennzeichnet, dass** dreidimensionale Bilddaten mit höher auflösenden zweidimensionalen Bilddaten verrechnet werden, um die räumliche Auflösung der dreidimensionalen Bilddaten senkrecht zur Projektionsrichtung zu verbessern.

13. Computerprogramm, welches eingerichtet ist, jeden Schritt eines Verfahrens gemäß einem der Ansprüche 1 bis 12 durchzuführen, wenn es auf einem Rechengerät abläuft.

14. Maschinenlesbarer Datenträger, auf welchem ein Computerprogramm gemäß Anspruch 13 gespeichert ist.

15. Dentalmedizinisches Bilderzeugungssystem, welches eingerichtet ist, mittels eines Verfahrens gemäß einem der Ansprüche 1 bis 12 gesteuert zu werden.

**Claims**

1. A method for processing image data of a dento-medical imaging system having a first imaging unit (205, 210) for generating two-dimensional image data and a second imaging unit (250, 255) for generating three-dimensional image data, the imaging system providing both two-dimensional image data and three-dimensional image data for an object (220, 222) to be examined, wherein the two-dimensional image data and the three-dimensional image data are merged with one another, wherein the three-dimensional image data are merged with one another by means of an image-processing operator on the basis of geometric imaging conditions, and the image data resulting from the merging are visualised, wherein the merging is carried out geometrically on the basis of a 2D/3D registration, wherein the relationship between a position and orientation of a detector and a radiation source is calculated in relation to a three-dimensional object to be examined, and a profile depth is calculated on the basis of a profile depth variation in order to determine which objects in the beam path from the radiation source to a given image point make which contribution, wherein at least one structure that is present in at least one image area during image generation and that influences the beam generated by a radiation source is subsequently subtracted out of the two-dimensional image data using the three-dimensional image data, wherein the beam damping or attenuation components of one or more volume elements are deducted or subtracted out.

2. The method according to claim 1, **characterised in that** the image-processing operator is formed for merging the two-dimensional image data and the three-dimensional image data by blending, addition or subtraction, by weighted addition or weighted subtraction, or a combination thereof.

3. The method according to any one of the preceding claims, **characterised in that** image points in a three-dimensional space are assigned to image points of a two-dimensional projection surface in order to merge the two-dimensional and three-dimensional image data.

4. The method according to claim 3, **characterised in that** at least one image area formed from said image points is determined by means of an optimiser on the basis of a quality measure in the three-dimensional space with a maximum correspondence with the two-dimensional projection surface.

5. The method according to claim 4, **characterised in that**, when determining an image area with a maximum contribution to the two-dimensional projection surface, three-dimensional image elements are evaluated which are located at a certain distance in a virtual beam path between a radiation source of the imaging system and one said imaging unit (205, 210, 250, 255).

6. The method according to claim 5, **characterised in that**, during said evaluation, an image element with a maximum contribution or a certain group of image elements with a maximum contribution is determined.

7. The method according to any one of the preceding claims, **characterised in that**, when merging the two-dimensional image data, the image content of the two-dimensional image data for a predeterminable profile depth of a virtual projection of all volume elements lying in a predeterminable beam path is subtracted from the predetermined profile depth.

8. The method according to claim 7, **characterised in that** the evaluation of the volume elements is carried out on the basis of a radiation integral $\varphi$ (i), a radiation absorption of the beam emitted by the radiation source (210) caused by volume elements (225) arranged along the beam path (224) being calculated for a considered angle segment $\varphi$ (223) of the detector (205) on the basis of a law of attenuation.

9. The method according to any one of claims 1 to 7, **characterised in that** the image content of the two-dimensional image data for a certain beam path of a radiation source is calculated on the basis of a filtered back projection in order to merge the three-dimensional image data.

10. The method according to any one of the preceding claims, **characterised in that** a tilting (415, 420) of a radiation detector (400) with respect to the optical axis (410) of the beam generated by a radiation source (400) that is present during the image generation of the two-dimensional image data is corrected (425) by means of a perspective correction on the basis of three-dimensional image data.

11. The method according to any one of claims 4 to 9, **characterised in that** a certain image area or certain group of image areas of a three-dimensional image represented by three-dimensional image data, which provides a maximum contribution to a two-dimensional image, is used as a measuring space for true-to-scale measurement in the two-dimensional image, the image points in the 2D space and said image points in the 3D space also being able to represent points on image areas, with planes, curved surfaces or even individual points or point clouds being able to be included, the image areas preferably being flat image areas.

12. The method according to any one of claims 1 to 6, **characterised in that** three-dimensional image data is merged with higher-resolution two-dimensional image data in order to improve the spatial resolution of the three-dimensional image data perpendicular to the projection direction.

13. A computer program which is set up to carry out each step of a method according to any one of claims 1 to 12 when it is run on a computer.

14. A machine-readable data carrier on which a computer program according to claim 13 is stored.

15. A dento-medical imaging system which is set up to be controlled by means of a method according to any one of claims 1 to 12.

**Revendications**

1. Procédé de traitement des données d'image d'un système d'imagerie de médecine dentaire, lequel comporte une première unité d'imagerie (205, 210) destinée à la génération des données d'image bidimensionnelles et une seconde unité d'imagerie (250, 255) destinée à la génération des données d'image tridimensionnelles, le système d'imagerie fournissant pour un objet (220, 222) à examiner des données d'image bidimensionnelles et des données d'image tridimensionnelles, les données d'image bidimensionnelles et les données d'image tridimensionnelles étant calculées les unes par rapport aux autres, le calcul étant effectué géométriquement en fonction d'un enregistrement 2D/3D, la relation entre une position et une orientation d'un détecteur et d'une source de rayonnement par rapport à un objet tridimensionnel à examiner étant calculée, et une profondeur de profil étant calculée en fonction d'une variation de profondeur de profil pour déterminer quels objets dans un trajet de rayonnement, de la source de rayonnement à un pixel donné, apportent quelle contribution, au moins une structure, présentant dans au moins une zone d'image lors de la génération d'image, laquelle influence le rayonnement généré par une source de rayonnement est ensuite calculée au moyen des données d'image tridimensionnelles à partir de données d'image bidimensionnelles, les composantes d'amortissement ou d'atténuation de rayonnement d'au moins un élément de volume étant soustraites ou éliminées.

2. Procédé selon la revendication 1, **caractérisé en ce que** l'opérateur de traitement d'image, pour calculer les données d'image bidimensionnelles et les données d'image tridimensionnelles, est formé par pliage, par addition ou soustraction, par addition pondérée ou soustraction pondérée, ou par leur combinaison.

3. Procédé selon l'une quelconque des revendications précédentes, **caractérisé en ce que**, pour calculer les données d'image bidimensionnelles et tridimensionnelles, des points d'image dans un espace tridimensionnel sont affectés à des points d'image d'une surface de projection bidimensionnelle.

4. Procédé selon la revendication 3, **caractérisé en ce qu'**une zone d'image formée à partir desdits points d'image est déterminée dans l'espace tridimensionnel présentant une correspondance maximale avec la zone de projection bidimensionnelle en fonction d'une mesure de qualité au moyen d'un optimiseur.

5. Procédé selon la revendication 4, **caractérisé en ce que** lors de la détermination d'une zone d'image présentant une contribution maximale à la zone de projection bidimensionnelle, des éléments d'image tridimensionnelle sont évalués, lesquels sont localisés à une distance déterminée dans un trajet virtuel de rayonnement entre une source de rayonnement du système d'imagerie et ladite unité de génération d'image (205, 210, 250, 255).

6. Procédé selon la revendication 5, **caractérisé en ce que**, lors de ladite évaluation, un élément d'image présentant une contribution la plus élevée ou un groupe déterminé d'éléments d'image présentant une contribution la plus élevée est déterminé.

7. Procédé selon l'une quelconque des revendications précédentes, **caractérisé en ce que** lors du calcul des données d'image bidimensionnelles, le contenu d'image des données d'image bidimensionnelles pour une profondeur de profil pouvant être prédéfinie est soustrait d'une projection virtuelle de tous les éléments de volume se trouvant dans un trajet de rayonnement prédéfini de la profondeur de profil prédéfinie.

8. Procédé selon la revendication 7, **caractérisé en ce que** l'évaluation des éléments de volume est effectuée en fonction d'une intégrale de rayonnement $\varphi$ (i), une absorption du rayonnement émis par la source de rayonnement (210) provoquée par des éléments de volume (225) disposés le long du trajet de rayonnement (224) pour un segment angulaire $\varphi$ (223) considéré du détecteur (205) étant calculée en fonction d'une loi d'atténuation.

9. Procédé selon l'une quelconque des revendications 1 à 7, **caractérisé en ce que**, pour calculer les données d'image tridimensionnelles, le contenu d'image des données d'image bidimensionnelles pour un trajet de rayonnement déterminé d'une source de rayonnement est calculé en fonction d'une rétroprojection filtrée.

10. Procédé selon l'une quelconque des revendications précédentes, **caractérisé en ce qu'**une inclinaison (415, 420) d'un détecteur de rayonnement (400) par rapport à l'axe optique (410) du rayonnement généré par une source de rayonnement (400) lors de la génération d'image des données d'image bidimensionnelle est corrigée (425) au moyen d'une correction de perspective en fonction des données d'image tridimensionnelles.

11. Procédé selon l'une quelconque des revendications 4 à 9, **caractérisé en ce qu'**une zone d'image déterminée ou un groupe de zones d'image déterminé d'une image tridimensionnelle représentée par les données d'image tridimensionnelles, laquelle fournit une contribution maximale à une image bidimensionnelle, est utilisée comme espace de mesure pour mesurer à l'échelle dans l'image bidimensionnelle, les points d'image dans l'espace 2D et lesdits points d'image dans l'espace 3D pouvant également représenter des points sur les surfaces d'image, des plans, des surfaces courbes ou même des points individuels ou des nuages de points pouvant être compris, il s'agit de préférence des surfaces d'image planes.

12. Procédé selon l'une quelconque des revendications 1 à 6, **caractérisé en ce que** les données d'image tridimensionnelles sont calculées avec des données d'image bidimensionnelles de résolution supérieure pour améliorer la résolution spatiale des données d'image tridimensionnelles perpendiculaires à la direction de projection.

13. Programme informatique, lequel est configuré pour mettre en œuvre chaque étape d'un procédé selon l'une quelconque des revendications 1 à 12 lorsqu'il est exécuté sur un appareil de calcul.

14. Support de données lisible par machine sur lequel est mémorisé un programme informatique selon la revendication 13.

15. Système d'imagerie de médecine dentaire, lequel est conçu pour être commandé selon un procédé selon l'une quelconque des revendications 1 à 12.

125  Z3  132  Z1  Z0  105  100

115

111  135

110  130  Z2  120

# Fig. 1

310  300

305

φ(i)

315

# Fig. 3

Fig. 2

EP 3 292 537 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10338145 A1
- EP 2570080 A1
- WO 2014008613 A1

**In der Beschreibung aufgeführte Nicht-Patentliteratur**

- A review of 3D/2D registration methods for image-guided interventions. **P. MARKELJ ; D. TOMAZEVIC ; B. LIKAR ; F. PERNUS.** Medical Image Analysis. Bd. In Press